Europäisches Patentamt

European Patent Office

Office européen des brevets

(19)

(11) EP 1 422 817 A2

## (12) DEMANDE DE BREVET EUROPEEN

(43) Date de publication:
26.05.2004 Bulletin 2004/22

(51) Int Cl.⁷: $H02M\ 5/04$, $H02J\ 3/04$

(21) Numéro de dépôt: 03364032.7

(22) Date de dépôt: 19.11.2003

(84) Etats contractants désignés:
AT BE BG CH CY CZ DE DK EE ES FI FR GB GR
HU IE IT LI LU MC NL PT RO SE SI SK TR
Etats d'extension désignés:
AL LT LV MK

(30) Priorité: 19.11.2002 FR 0214461

(71) Demandeur: Thuillier M.C.A.
72800 Le Lude (FR)

(72) Inventeur: Poussin, Gérard
72800 Le Lude (FR)

(74) Mandataire: Vidon, Patrice
Cabinet Vidon
16 B, rue Jouanet - B.P. 90333
35703 Rennes Cedex 7 (FR)

(54) **Dispositif de conversion d'une source électrique triphasée en une alimentation électrique monophasée**

(57) L'invention concerne un dispositif de conversion (20, 30, 40, 50) d'une source triphasée en une alimentation monophasée, comprenant :

- des première (23, 33, 411, 511), deuxième (24, 34, 430, 530) et troisième (25, 35, 431, 531) entrées correspondant chacune à une phase de la source ;
- une entrée de neutre ;
- une sortie (26, 36, 421, 521) délivrant une tension (U3) de sortie ;

- des premiers (28, 38, 37, 41, 45, 51, 55) et seconds (21, 31, 43, 47, 53, 57) moyens de transformation de tension en un premier et un second flux d'énergie électromagnétique
- des moyens d'addition (28, 21, 27, 38, 31, 37, 46, 56) des premier et second flux pour former un troisième flux d'énergie électromagnétique ; et
- des moyens de transformation (28, 21, 38, 31, 46, 42, 56, 52) du troisième flux en la tension de sortie.

Fig. 2A

EP 1 422 817 A2

**Description**

La présente invention se rapporte au domaine de l'électricité et des alimentations électriques et plus précisément des convertisseurs adaptés à convertir une source électrique triphasée en une source monophasée.

Traditionnellement, les transformateurs électriques triphasés-monophasés sont réalisés à partir de transformateurs monophasés selon un montage dit « en paire de Scott ». Selon ce montage, deux transformateurs monophasés sont branchés en T, le point milieu de l'enroulement primaire du premier transformateur monophasé étant relié à l'une des extrémités de l'enroulement primaire du second. Ces transformateurs permettent notamment d'alimenter en monophasé un utilisateur de réseau électrique triphasé.

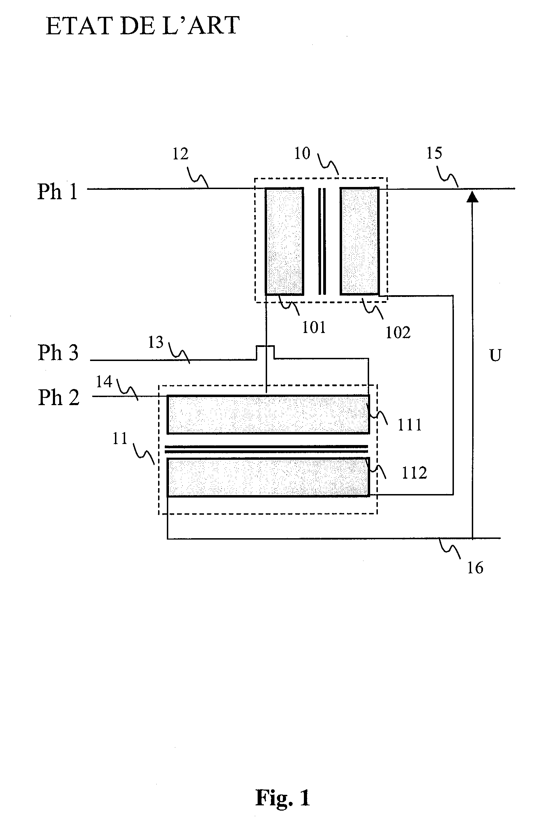

Ainsi, la figure 1 présente un tel dispositif comprenant :

- un premier transformateur monophasé 10 muni d'un circuit à flux primaire 101 et d'un circuit à flux secondaire 102 ; et
- un second transformateur monophasé 11 muni d'un circuit à flux primaire 111 et d'un circuit à flux secondaire 112.

Le convertisseur comprend une alimentation électrique constituée de trois phases 12 à 14, la première phase 12 étant connectée à l'entrée du circuit à flux primaire 101 du premier transformateur 100, la seconde phase à l'entrée du circuit à flux primaire 111 du second transformateur 11 et la troisième phase à la sortie l'entrée du circuit à flux primaire 111 du second transformateur 11.

La sortie du circuit à flux primaire 101 du premier transformateur 10 est reliée au point milieu de l'enroulement primaire 111 du second transformateur 11 et l'entrée du circuit à flux secondaire 102 du premier transformateur 10 à l'entrée du circuit à flux secondaire 112 du second transformateur 11.

La tension monophasée U en sortie du convertisseur est prise entre :

- la borne 15 de sortie du circuit à flux secondaire 102 du premier transformateur 10 ; et
- la borne 16 de sortie du circuit à flux secondaire 112 du second transformateur 11.

Néanmoins, ces techniques présentent l'inconvénient de ne pas équilibrer sur les trois phases d'alimentation électrique. En d'autres termes, ces transformateurs ne permettent pas une consommation électrique égale sur les trois phases d'alimentation. Lorsque les phases sur un circuit d'alimentation ne sont pas équilibrées les autres utilisateurs du réseau électrique sont pénalisés par des chutes de tension non symétriques ou des mauvais fonctionnements de certains matériels sensibles aux déséquilibres de phase.

En outre, ces techniques présentent l'inconvénient d'être mal adaptées à la fourniture de tension monophasée à des usagers situés en fin de ligne de réseau triphasé ou en aval de gros consommateurs d'électricité, des chutes de tension pouvant se produire.

On connaît également dans l'état de la technique des convertisseurs triphasés-monophasés utilisant des composants actifs tels que des diodes, des thyristors ou des transistors. La conversion triphasée-monophasée selon ces techniques est basée sur un redressement du courant d'entrée en une tension continue avant de fournir une tension alternative monophasée. Ces convertisseurs présentent l'inconvénient de modifier la forme du signal qui, par exemple, n'est plus sinusoïdal ou n'a pas la même fréquence avant et après conversion.

L'invention selon ses différents aspects a notamment pour objectif de pallier ces inconvénients de l'art antérieur.

Plus précisément, un objectif de l'invention est de fournir un convertisseur triphasé-monophasé assurant une consommation électrique équilibrée sur les trois phases de l'alimentation triphasée.

Un autre objectif de l'invention est de mettre en oeuvre un convertisseur triphasé-monophasé ne déformant pas le signal électrique et conservant la même fréquence.

L'invention a également pour objectif un convertisseur triphasé-monophasé relativement simple à fabriquer et à mettre en oeuvre.

Ces objectifs ainsi que d'autres qui apparaîtront par la suite sont atteints selon l'invention, à l'aide d'un dispositif de conversion d'une source électrique triphasée en une alimentation électrique monophasée, comprenant :

- une première entrée correspondant à une première phase de la source électrique triphasée ;
- une deuxième entrée correspondant à une deuxième phase de la source électrique triphasée ;
- une troisième entrée correspondant à une troisième phase de la source électrique triphasée ;
- une entrée de neutre ; et
- une sortie délivrant une tension de sortie correspondant à l'alimentation électrique monophasée,
- des premiers moyens de transformation d'une tension entre la première entrée et l'entrée de neutre en un premier flux d'énergie électromagnétique ;

- des seconds moyens de transformation d'une tension entre la deuxième entrée et la troisième entrée en un second flux d'énergie électromagnétique ;
- des moyens d'addition du premier flux et du second flux pour former un troisième flux d'énergie électromagnétique ; et
- des moyens de transformation du troisième flux en la tension de sortie.

Selon une caractéristique particulière, le dispositif est remarquable en ce que les première, seconde et troisième phases de la source électrique triphasée varient selon une amplitude sensiblement périodique et sans composante continue.

En effet, le dispositif est particulièrement bien adapté à une conversion d'une source électrique triphasée sensiblement périodique sans composante continue (qui correspond à l'alimentation fournie généralement par les distributeurs d'énergie électrique) en une alimentation électrique monophasée sensiblement périodique (qui correspond à une utilisation relativement standard d'alimentation électrique destinée à des appareils courants, fonctionnant avec une tension alternative).

Selon une caractéristique particulière, le dispositif est remarquable en ce que les premier et second flux sont en quadrature de phase.

Selon une caractéristique particulière, le dispositif est remarquable en ce que la tension de sortie est présentée en sortie du dispositif entre un premier point de sortie et un second point de sortie, le premier point de sortie étant relié à l'entrée de neutre.

Ainsi, le neutre de l'alimentation de sortie monophasée correspond au neutre de l'alimentation d'entrée triphasée, ce qui simplifie une mise en oeuvre.

En outre, un raccordement du neutre entre le réseau triphasé et la sortie monophasée permet de placer un disjoncteur différentiel en amont du convertisseur.

Selon une caractéristique particulière, le dispositif est remarquable en ce que les premier, second et troisième flux d'énergie électromagnétique sont des flux électriques.

Selon une caractéristique particulière, le dispositif est remarquable en ce que le dispositif comprend un premier transformateur monophasé et un second transformateur monophasé.

Ainsi, l'invention est relativement simple à mettre en oeuvre et convient pour tout type de tension triphasée à convertir en tension monophasée.

Selon une caractéristique particulière, le dispositif est remarquable en ce que les premier et second transformateurs comprennent chacun un circuit à flux primaire et un circuit à flux secondaire ;

- en ce que les extrémités du circuit à flux primaire du premier transformateur sont reliées respectivement à la première entrée et à l'entrée de neutre ;
- en ce que les extrémités du circuit à flux primaire du second transformateur sont reliées respectivement à la seconde entrée et à la troisième entrée ;
- en ce qu'une première extrémité du circuit à flux secondaire du premier transformateur est reliée à une première extrémité du circuit à flux secondaire du second transformateur ; et
- en ce qu'une seconde extrémité du circuit à flux secondaire du premier transformateur et une seconde extrémité du circuit à flux secondaire du second transformateur présentent la tension de sortie.

Ainsi, cette architecture de convertisseur permet d'additionner les premier et second flux électriques fournis par le premier et le second transformateur pour fournir la tension de sortie. En outre, un tel convertisseur est relativement simple à fabriquer et donc économique. En outre, il offre une grande fiabilité.

De plus, une séparation des circuits primaires et secondaires permet une séparation des neutres d'entrée et de sortie. Ainsi, la sortie est complètement flottante par rapport à l'entrée, ce qui permet de mieux isoler l'utilisateur du réseau de distribution électrique et de pallier certaines perturbations (notamment risques liés à la foudre ou perturbations produites par l'utilisateur).

Selon une caractéristique particulière, le dispositif est remarquable en ce que les premier et second transformateurs ont respectivement des premier et second coefficients de transformation égaux.

Ainsi, la tension sortie est en quadrature de phase sur la première phase. Si les coefficients de transformation des premier et second transformateur sont différents, la quadrature est imparfaite et il en résulte un déphasage du signal de sortie.

Selon une caractéristique particulière, le dispositif est remarquable en ce que la tension de sortie est égale à deux fois le premier coefficient de transformation multiplié par la tension entre la première entrée et l'entrée de neutre.

Ainsi, il est aisé de dimensionner correctement les premier et second transformateurs pour obtenir la tension de sortie désirée en fonction de la tension d'entrée.

Selon une caractéristique particulière, le dispositif est remarquable en ce que la résistance interne du second transformateur est sensiblement égale la résistance interne du premier transformateur multiplié par la racine carrée de trois.

La résistance interne d'un transformateur est ici la somme :

- de la résistance interne du circuit à flux primaire ramenée au secondaire (soit la résistance du circuit à flux primaire multipliée par le carré du coefficient de transformation du transformateur) ; et
- de la résistance interne du circuit à flux secondaire.

Si le transformateur considéré est un autotransformateur, la résistance interne du transformateur est la somme de la résistance interne du circuit à flux primaire et de la résistance interne du circuit à flux secondaire.

De cette manière, les résistances internes du premier transformateur et du second transformateur sont respectivement dans le même rapport que les coefficients de tension du premier transformateur et du second transformateur. De plus, la tension de sortie reste orthogonale à la tension entre la première entrée et l'entrée de neutre.

Ainsi, on équilibre la consommation électrique sur chacune des phases, ce qui permet de limiter les perturbations du réseau d'alimentation, apportées par le convertisseur.

Selon une caractéristique particulière, le dispositif est remarquable en ce que le premier transformateur est un autotransformateur.

Ainsi, on obtient une réduction des coûts de fabrication, une diminution de l'encombrement du convertisseur et un raccordement facile du neutre de sortie au neutre du réseau.

Selon une caractéristique particulière, le dispositif est remarquable en ce que le premier transformateur est un transformateur avec un circuit à flux primaire et un circuit à flux secondaire dissociés.

Ainsi, l'invention permet d'augmenter l'immunité du convertisseur aussi bien à des phénomènes extérieurs comme notamment la foudre, qu'à des perturbations produites par un utilisateur.

Selon une caractéristique particulière, le dispositif est remarquable en ce que les premier et second transformateurs comprennent des moyens de ferro-résonance.

Ainsi, il est possible de compenser des variations de tension du réseau en conservant la phase et la fréquence.

Selon une caractéristique particulière, le dispositif est remarquable en ce que les premier, second et troisième flux d'énergie électromagnétique sont des flux d'énergie magnétique.

Ici, un flux d'énergie magnétique est considéré comme étant le produit d'une induction (ou champ) magnétique par un flux magnétique.

Selon une caractéristique particulière, le dispositif est remarquable en ce que le dispositif comprend un circuit magnétique triphasé.

Selon une caractéristique particulière, le dispositif est remarquable en ce que le circuit magnétique triphasé comprend trois bras bobinés, dits respectivement premier, second et troisième bras, comprenant chacun une bobine ;

- en ce que la bobine du premier bras est reliée à la première entrée et à l'entrée de neutre ;
- en ce que la bobine du troisième bras est reliée à ladeuxième entrée et à la troisième entrée ; et
- en ce que la bobine du deuxième bras présente à ses extrémités la tension de sortie.

Ici, le dispositif peut notamment comprendre un noyau de trois bras formé de :

- un seul bloc ; ou
- deux blocs comportant chacun deux bras, l'un des bras d'un bloc étant accolé à un bras de l'autre bloc, les deux bras ainsi accolés formant le deuxième bras.

Selon une caractéristique particulière, le dispositif est remarquable en ce que la résistance de la bobine du deuxième bras est sensiblement égale à la résistance de la bobine du premier bras multipliée par la racine carrée de trois.

Ainsi, les résistances électriques des bobines d'entrée étant équilibrées, le courant circulant dans chacune des bobines est le même. De cette manière, on équilibre la consommation électrique sur chacune des phases, ce qui permet de limiter les perturbations du réseau d'alimentation, apportées par le convertisseur. Par ailleurs, les résistances des bobines de chacun des premier, deuxième et troisième bras seront choisies pour être les plus faibles possibles.

Selon une caractéristique particulière, le dispositif est remarquable en ce que les nombres de spires des bobines du premier bras et du deuxième bras sont sensiblement égaux.

Selon une caractéristique particulière, le dispositif est remarquable en ce que les sections des noyaux de chacun des premier, deuxième et troisième bras sont égales et, en outre, inférieures ou égales à chacune des surfaces de fermetures du circuit magnétique triphasé.

Ainsi, un circuit magnétique standard peut être utilisé, ce qui permet une réduction des coûts de fabrication.

Selon une caractéristique particulière, le dispositif est remarquable en ce que la section du noyau du deuxième bras est sensiblement égale à la section du noyau du premier bras multipliée par la racine carrée de trois et en ce que la section du noyau du troisième bras est sensiblement égale à la section du noyau du premier bras multipliée deux.

Ainsi, l'utilisation de bras de section adaptée permet un rendement optimum. Cette optimisation permet notamment une réduction du volume du fil de bobinage (par exemple en cuivre), et la simplification du montage mécanique du convertisseur. Un découpage optimisé d'un circuit magnétique est souhaitable dans de nombreux cas notamment pour des séries importantes.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un convertisseur triphasé-monophasé selon l'état de l'art ;
- les figures 2A, 2B et 2C illustrent un convertisseur triphasé-monophasé mettant en oeuvre un autotransformateur selon l'invention;
- la figure 3 décrivent un convertisseur triphasé-monophasé mettant en oeuvre deux transformateurs monophasés selon une variante de réalisation de l'invention ;
- les figures 4A, 4B et 4C présentent un convertiseur triphasé-monophasé mettant en oeuvre un seul circuit magnétique selon une variante de réalisation de l'invention ; et
- la figure 5 présente un convertiseur triphasé-monophasé mettant en oeuvre un seul circuit magnétique selon une autre variante de réalisation de l'invention.

Le principe général de l'invention repose sur un dispositif de transformation d'une alimentation triphasée comportant quatre fils dont un neutre et trois phases en monophasé chacun des quatre fils étant branché en entrée du dispositif de sorte que la tension de sortie corresponde à la somme :

- d'une première tension correspondant à la différence de potentiel électrique entre le neutre et une première phase ; et
- d'une deuxième tension correspondant à la différence de potentiel électrique entre les deux autres phases;

    les première et deuxième tensions étant en quadrature de phase.

Le même principe s'applique lorsque les tensions ne sont pas directement générées par au moins deux transformateurs mais par un seul transformateur comprenant des bras comprenant chacun un bobinage créant un flux magnétique, le flux magnétique créant une tension de sortie correspondant alors à la somme :

- d'un premier flux magnétique créé par une bobine alimentée par première tension correspondant à la différence de potentiel électrique entre le neutre et une première phase ; et
- d'un second flux magnétique créé par une deuxième tension correspondant à la différence de potentiel électrique entre les deux autres phases ;

    les premier et deuxième flux magnétiques étant en quadrature de phase.

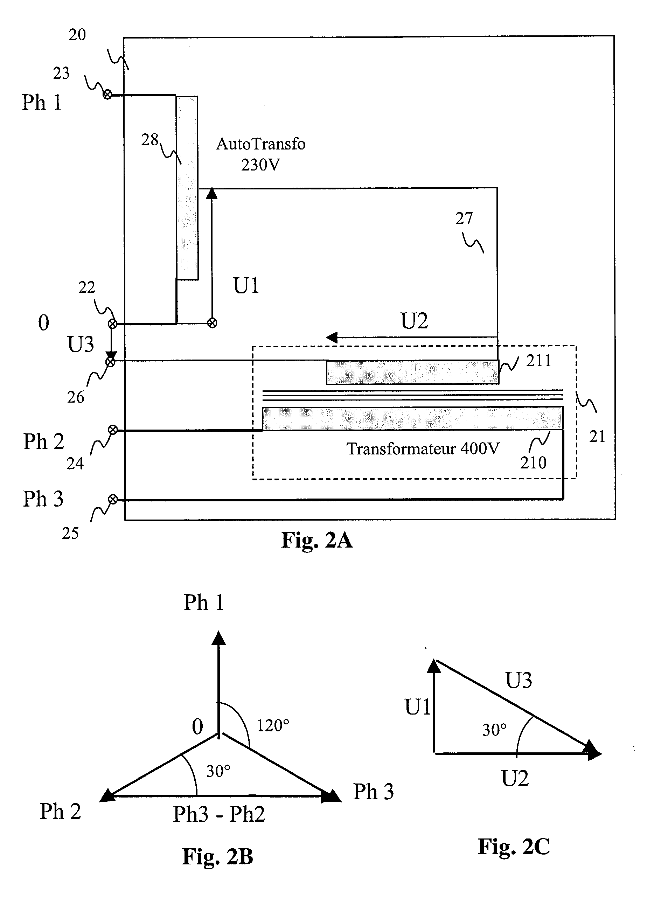

On présente, en relation avec la figure 2A un convertisseur 20 alimenté par un circuit d'alimentation électrique en triphasé de 400 volts et fournissant en sortie une tension de sortie monophasée voisine de 230 volts mettant en oeuvre un autotransformateur selon l'invention.

Le convertisseur 20 comprend :

- quatre bornes d'entrées 22 à 25 ;
- deux bornes de sorties 22 et 26 ;
- un autotransformateur 28 ; et
- un transformateur 21 comprenant un circuit à flux primaire 210 et un circuit à flux secondaire 211.

Les bornes d'entrée 23, 24 et 25 sont alimentées respectivement par la première, deuxième, et troisième phase (notées respectivement *Ph*1, *Ph*2 et *Ph*3) du circuit d'alimentation électrique triphasé.

La borne 22 est reliée à la fois au fil de neutre du circuit d'alimentation et au neutre du circuit de sortie.

L'autotransformateur 28 est relié en entrée à la borne 22 (neutre) à une première extrémité de son bobinage et à la borne 23 (première phase du circuit d'alimentation) à l'autre extrémité de son bobinage. La tension aux bornes de l'autotransformateur 28 est donc voisine de 230 Volts (soit 400/√3).

Le circuit à flux primaire 210 du transformateur 21 est relié d'une part à la borne d'alimentation 24 (seconde phase du circuit d'alimentation) et à la borne d'alimentation 25 (troisième phase du circuit d'alimentation) présentant ainsi une tension de 400 volts résultant de l'addition vectorielle des tensions correspondant respectivement à la deuxième phase et à la troisième phase du circuit d'alimentation.

L'autotransformateur 28 fournit entre l'entrée 22 connectée au neutre et sa sortie 27 une tension U1 correspondant à une fraction de la tension entre les bornes 23 et 22 (primaire de l'autotransformatieur 28) ce qui conduit à une première relation vectorielle suivante, où $k1$ représente un rapport de transformation :

$$U1 = k1(Ph1 - 0) \qquad \text{(relation 1)}.$$

Le secondaire 211 du transformateur 21 est relié d'une part à la sortie 27 de l'autotransformateur 28 et d'autre part à la sortie 26 du convertisseur 20. Ainsi, le secondaire présente entre ses bornes 27 et 26 une tension U2. Ainsi, la tension U2 correspond à une fraction de la tension présente entre les troisième et seconde phase ($Ph3$-$Ph2$) phases, ce qui conduit à une seconde relation vectorielle suivante, où $k2$ représente un rapport de transformation :

$$U2 = k2(Ph3 - Ph2) \qquad \text{(relation 2)}.$$

La tension de sortie U3 du convertisseur 20 est prise entre la borne 26 (sortie du secondaire 211 du transformateur 21) et la borne 22 (neutre).

Ainsi, on a la troisième relation vectorielle suivante :

$$U3 = U1 + U2 \qquad \text{(relation 3)}$$

Comme illustré en regard des figures 2B et 2C représentant respectivement de manière schématique les phases $Ph1$, $Ph2$ et $Ph3$ et les tensions U1, U2 et U3, les vecteurs $Ph1$ et ($Ph3$-$Ph2$) sont orthogonaux. Ainsi, les tensions, U1 et U2 sont également orthogonales. Ce qui conduit à la quatrième relation sur les amplitudes des tensions:

$$U3^2 = U1^2 + U2^2 \qquad \text{(relation 4)}.$$

Par ailleurs, les trois phases d'alimentation sont déphasées de 120°. Ainsi, comme illustré en regard de la figure 2B, les phases sont reliées par la relation suivante :

$$\tan 30° \times Ph1 = Ph3 - Ph2 \text{ ou}$$

$$\sqrt{3}\, Ph1 = Ph3 - Ph2 \qquad \text{(relation 5)}.$$

Les circuits à flux secondaire des transformateurs 28 et 21 sont dimensionnés de sorte à restituer une fraction constante de la tension d'entrée.

En combinant les relations 2 ($U2 = k2(Ph3 - Ph2)$), et 5, on obtient la relation :

$$U2 = k2.\, \sqrt{3}\, Ph1 \qquad \text{(relation 6)}.$$

En combinant les relations 1, 4 et 6, on obtient la formule générale suivante :

$$U3^2 = U1^2 + U2^2 = (k1.Ph1)^2 + (k2.\, \sqrt{3}\, Ph1)^2 = (k1^2 + 3.k2^2)Ph1^2 \text{ ou}$$

$$U3 = \sqrt{(k1^2 + 3.k2^2)}\, Ph1 \qquad \text{(relation 7)}.$$

$Ph1$ représentant ici la différence de potentiel entre les bornes 23 et 22 est imposée par le circuit d'alimentation et vaut par exemple 230 Volts.

$k1$ et $k2$ sont des paramètres propres respectivement aux transformateurs 28 et 21 et correspondent aux fractions de tensions présentent aux extrémités des secondaires respectifs. Ils doivent être choisis en fonction de la valeur désirée de U3.

Si, par exemple, on souhaite une tension de sortie U3 égale à 230 Volts, il faut que $\sqrt{(k1^2 + 3.k2^2)}$ soit égale à 1. En d'autres termes, $(k1^2 + 3.k2^2)$ doit être égale à 1.

En choisissant correctement le rapport $k1/k2$, on peut également définir le déphasage de la tension de sortie U3 par rapport à, par exemple, U1 ou à la phase $Ph1$.

Si $k1$ et $k2$ sont égaux à une valeur $k$, la tension de sortie U3 est en phase avec $Ph3$-$Ph2$ ou en quadrature de phase avec $Ph1$. Dans ce cas, la relation 7 conduit à :

$$U3 = \sqrt{(k1^2 + 3.k2^2)}\ Ph1 = 2.\ k.\ Ph1 \qquad \text{(relation 8).}$$

Ainsi, si $Ph1$ vaut 230 V, pour que U3 vaillent aussi 230 V, il suffit que $k1$ et $k2$ soient égaux à $k$ valant 0,5. En d'autres termes, les transformateurs 28 et 21 sont dimensionnés de sorte que la tension aux bornes des secondaires est égale à la moitié de la tension aux bornes des circuits à flux primaire.

A titre illustratif, si $Ph1$ vaut 230 V, pour que U3 vaillent 250 V, il suffit que $k1$ et $k2$ soient égaux à U3/$Ph1$/2 soit 250/230/2 ou 0,543. En d'autres termes, dans ce cas, les transformateurs 28 et 21 sont dimensionnés de sorte que la tension aux bornes des secondaires est égale à 0,543 fois la tension aux bornes des circuits à flux primaire. Ainsi, chacun des transformateurs 28 et 21 sont réalisés pour obtenir les valeurs de rapport de transformation selon des techniques connues de l'homme du métier en fonction du nombre de spires des bobines correspondantes, de la surface du noyau magnétique et de l'induction créée.

Par ailleurs, pour que la consommation sur les trois phases reste équilibrée quelle que soit la consommation en courant de sortie, il est nécessaire que les résistances internes des deux transformateurs 28 et 21 restent sensiblement dans le même rapport que les rapports des tensions (c'est-à-dire dans le même rapport ou dans un rapport proche, par exemple, avec une marge d'erreur inférieure ou égale à 10%).

Selon une variante de réalisation, les transformateurs 21 et 28 sont des transformateurs ferro-résonnants tels qu'illustré notamment dans le chapitre 9 intitulé « Constant Voltage Transformer Design » (ou « design de transformateur à tension constante ») du livre « Transformer and inductor design book » écrit par le colonel WM. T. MC LYMAN édité en 1988. Dans un transformateur ferro-résonnant, la tension de sortie est indépendante de la tension d'entrée dans la limite imposée à la construction.

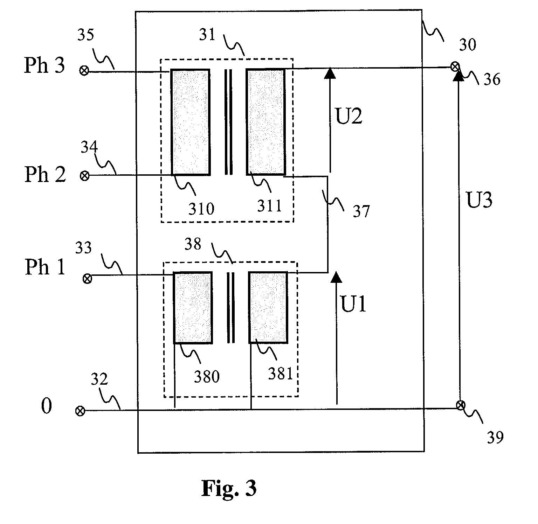

Selon une variante de réalisation de l'invention décrite à la figure 3, un convertisseur 30 est alimenté par un circuit d'alimentation électrique en triphasé de 400 volts et fournit en sortie une tension de sortie monophasée voisine de 230 volts mettant en oeuvre deux transformateurs selon l'invention.

Le convertisseur 30 comprend :

- quatre bornes d'entrées 32 à 35 ;
- deux bornes de sorties 36 et 39 ;
- un transformateur 31 comprenant un circuit à flux primaire 310 et un circuit à flux secondaire 311 ; et
- un transformateur 38 comprenant un circuit à flux primaire 380 et un circuit à flux secondaire 381.

Les bornes d'entrée 33, 34 et 35 sont alimentées respectivement par la première, deuxième, et troisième phase (notées respectivement $Ph1$, $Ph2$ et $Ph3$) du circuit d'alimentation électrique triphasé.

La borne 32 est reliée à la fois au fil de neutre du circuit d'alimentation et au neutre 39 du circuit de sortie.

Le circuit à flux primaire 380 du transformateur 38 est relié d'une part à la borne 32 (neutre) et à la borne d'alimentation 33 (première phase du circuit d'alimentation) présentant ainsi une tension de 230 volts correspondant à la première phase.

Le circuit à flux primaire 310 du transformateur 31 est relié d'une part à la borne d'alimentation 34 (seconde phase du circuit d'alimentation) et à la borne d'alimentation 35 (troisième phase du circuit d'alimentation) présentant ainsi une tension de 400 volts résultant de l'addition vectorielle des tensions correspondant respectivement à la deuxième phase et à la troisième phase du circuit d'alimentation.

Le secondaire 381 du transformateur 38 est relié d'une part au neutre 32 et 39 et d'autre part à une entrée 37 du secondaire 311 du transformateur 31. Ainsi, le secondaire présente entre ses bornes 32 et 37 une tension U1 correspondant à une fraction de la tension entre les bornes 33 et 32 (primaire du transformatieur 38) ce qui conduit à la relation vectorielle suivante :

$$U1 = k1(Ph1\ \text{-}0) \qquad \text{(relation 1').}$$

Le secondaire 311 du transformateur 31 est relié d'une part à la sortie 37 du transformateur 38 et d'autre part à la sortie 36 du convertisseur 30. Ainsi, le secondaire 311 présente entre ses bornes 36 et 37 une tension U2. Ainsi, la tension U2 correspond à une fraction de la tension présente entre les troisième et seconde phase (*Ph*3-*Ph*2) phases ce qui conduit à la relation vectorielle suivante :

$$U2 = k2(Ph3 - Ph2) \qquad \text{(relation 2').}$$

La tension de sortie U3 du convertisseur 30 est prise entre la borne 36 (sortie du secondaire 311 du transformateur 31) et la borne 39 (neutre).

Ainsi, on a la relation vectorielle suivante :

$$U3 = U1 + U2 \qquad \text{(relation 3')}$$

Ainsi, on obtient des relations entre les tensions présentent aux bornes des secondaires des transformateurs et en sortie du convertisseur tout à fait similaire à celles obtenues en regard de la figure 2. On obtient donc la même formule finale :

$$U3 = \sqrt{(k1^2 + 3.k2^2)}\ Ph1 \qquad \text{(relation 7').}$$

De même que précédemment, *k*1 et *k*2 sont des paramètres propres respectivement aux transformateurs 38 et 31 et correspondent aux fractions de tensions présentent aux extrémités des secondaires respectifs. Ils doivent être choisis en fonction de la valeur désirée de U3.

Si, par exemple, on souhaite une tension de sortie U3 égale à 230 Volts, il faut que $\sqrt{(k1^2 + 3.k2^2)}$ soit égale à 1.

En choisissant correctement le rapport *k*1/*k*2, on peut également définir le déphasage de la tension de sortie U3 par rapport à, par exemple, U1 ou à la phase *Ph*1.

Si *k*1 et *k*2 sont égaux à une valeur *k*, la tension de sortie U3 est en phase avec *Ph*3-*Ph*2 ou en quadrature de phase avec *Ph*1. Dans ce cas, la relation 7' conduit à :

$$U3 = \sqrt{(k1^2 + 3.k2^2)}\ Ph1 = 2.\ k.\ Ph1 \qquad \text{(relation 8').}$$

Ainsi, comme précédemment illustré, si *Ph*1 vaut 230 V, pour que U3 vaille aussi 230 V, il suffit que *k*1 et *k*2 soient égaux à *k* valant 0,5. En d'autres termes, les transformateurs 38 et 31 sont dimensionnés de sorte que la tension aux bornes des secondaires est égale à la moitié de la tension aux bornes des circuits à flux primaire.

Selon une variante non représentée, les neutres d'entrée et de sortie ne sont pas reliés, ce qui permet notamment une isolation galvanique et une immunité aux perturbations en amont et en aval du convertisseur. Cette variante est compatible avec l'incorporation d'un écran électrostatique dans les transformateurs entre les circuits à flux primaires et les circuits à flux secondaires, ce qui permet de diminuer encore plus, voire d'éliminer complètement les perturbations entre l'amont et l'aval du convertisseur.

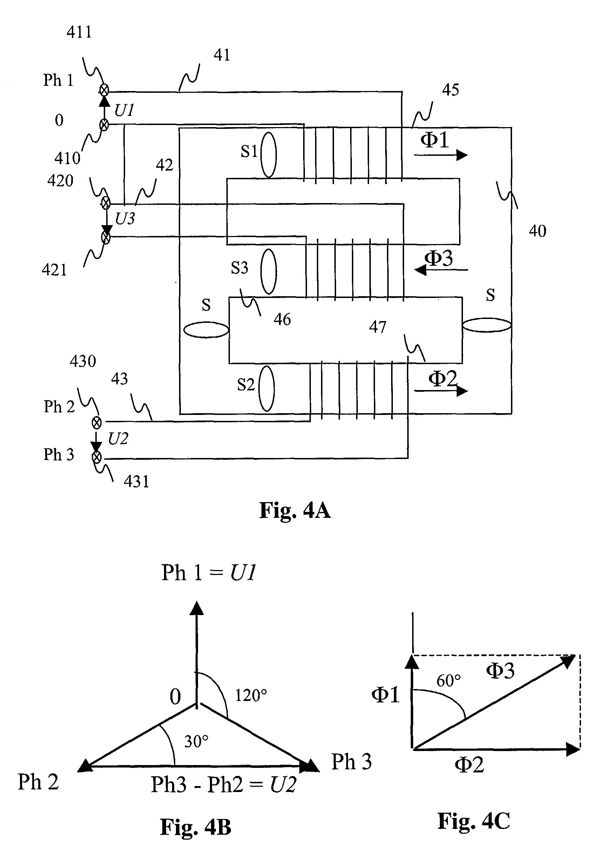

On présente, en relation avec la **figure 4A** un convertisseur 40 alimenté par un circuit d'alimentation électrique en triphasé de 400 volts et fournissant en sortie une tension de sortie monophasée voisine de 230 volts mettant en oeuvre un transformateur selon l'invention.

Le convertisseur 40 comprend :

- trois bras 45, 46 et 47 de section sensiblement identique (c'est-à-dire identique ou proche avec une faible différence, par exemple, inférieure ou égale à 5%), reliés entre eux par leurs extrémités formant un circuit magnétique triphasé ;
- trois bobines 41, 42 et 43 ;
- deux bornes de sorties 420 et 421 ; et
- quatre bornes d'entrée 410, 411, 430 et 431.

Les bornes d'entrée 411, 430 et 431 sont alimentées respectivement par la première, deuxième, et troisième phase (notées respectivement *Ph*1, *Ph*2 et *Ph*3) du circuit d'alimentation électrique triphasé.

La borne 410 est reliée à la fois au fil de neutre du circuit d'alimentation et au neutre du circuit de sortie.

La bobine 41 entoure le bras 45, comprend *N*1 spires et ses extrémités sont reliées à la borne 410 (neutre) et à la borne 411 (première phase du circuit d'alimentation) ; elle présente donc une tension d'entrée notée *U1* égale à la première phase du circuit d'alimentation.

La bobine 43 entoure le bras 47, comprend *N*2 spires et ses extrémités sont reliées à la borne 430 (deuxième phase du circuit d'alimentation) et à la borne 431 (troisième phase du circuit d'alimentation); elle présente donc une tension d'entrée notée *U*2 égale à la différence des troisième et seconde phases du circuit d'alimentation.

La bobine 42 entoure le bras 46, comprend N3 spires et ses extrémités sont reliées aux bornes de sortie 420 (neutre) et 421 (phase du circuit d'alimentation monophasée en sortie) ; elle présente donc une tension de sortie notée *U3* égale à la phase du circuit d'alimentation monophasée en sortie.

Lorsque le convertisseur est sous tension, les bras 45, 47 et 46 sont parcourus respectivement par des flux magnétiques Φ1, Φ2 et Φ3, les flux Φ1 et Φ2 étant créés respectivement par les bobines 41 et 43 et le flux Φ3 étant reçu par la bobine 42.

Il y a conservation des flux magnétiques à l'intérieur du transformateur 40.

Ainsi, on peut établir la relation vectorielle suivante :

$$\Phi3 = \Phi1 + \Phi2$$

Par ailleurs, l'homme du métier définit un spire-volt, noté *SpV,* dans un bras de convertisseur comme étant le nombre de spires nécessaires pour obtenir une tension égale à un volt.

Ainsi, le spire volt, *SpVi*, pour le *i*ème bras du transformateur est égal au nombre de spires de cette bobine divisée par la tension appliquée à la bobine du *i*ème bras, soit :

- pour le bras 45, *SpV1 = N1/(Ph1-0) = N1/U1* ;
- pour le bras 47, *SpV2 = N2/(Ph3-Ph2) = N2/U2* ; et
- pour le bras 46, *SpV3 = N3/U3*.

Les formules de Boucherot bien connues de l'homme de l'art permettent de déterminer le spire-volt à l'intérieur d'une bobine *i* ou d'un bras de transformateur. Ainsi, selon ces formules, le spire-volt d'une bobine est égal à l'inverse du produit de :

- un facteur valant $2\pi/\sqrt{2}$ ; par
- la fréquence *F* du courant parcourant la bobine, exprimée en Hertz (Hz) ; par
- l'induction *Bi* créée à l'intérieur de la bobine *i*, en Tesla ; et par
- la surface *Si* de fermeture du noyau de la bobine, en $m^2$.

  soit : $1/SpVi = 2\pi/\sqrt{2}$. F. *Bi. Si.*

Ainsi,

- $1/SpV1 = 2\pi/\sqrt{2}$ . F. *B1. S1* = $2\pi/\sqrt{2}$ . F. Φ1 ;
- $1/SpV2 = 2\pi/\sqrt{2}$ . F. *B2. S2* = $2\pi/\sqrt{2}$ . F. Φ2 ; et
- $1/SpV3 = 2\pi/\sqrt{2}$ . F. *B3. S3* = $2\pi/\sqrt{2}$ . F. Φ3 ;

  ou encore :

- $1/SpV1 = 2\pi/\sqrt{2}$ . F. Φ1 = *U1/N1* ;
- $1/SpV2 = 2\pi/\sqrt{2}$ . F. Φ2 = *U2/N2* ; et
- $1/SpV3 = 2\pi/\sqrt{2}$ . F. Φ3 = *U3/N3*.

Comme illustré en regard des figures 4B et 4C représentant respectivement de manière schématique les phases *Ph*1*, Ph*2 et *Ph*3 et les flux Φ1, Φ2 et Φ3, les vecteurs *Ph*1 et (*Ph*3-*Ph*2) sont orthogonaux. Ainsi, les flux Φ1 et Φ2 sont également orthogonaux, ce qui conduit à la relation suivante sur les amplitudes des flux:

$$\Phi3^2 = \Phi1^2 + \Phi2^2 \qquad \text{(relation 10).}$$

Par ailleurs, les trois phases d'alimentation sont déphasées de 120°. Ainsi, comme illustré en regard de la figure 4B, les phases sont reliées par la relation suivante :

$$U1 = \tan 30° \; U2 \quad \text{ou}$$

$$\sqrt{3} \; U1 = U2 \qquad \text{(relation 11)}.$$

Ainsi, pour une tension U1 aux bornes de la bobine 43 voisine de 400 Volts, on obtient une tension U2 aux bornes de la bobine 41 voisine de 230 Volts (soit 400/√3).

De même, le flux Φ2 est égal au flux Φ1 multiplié par la racine carrée de 3 :

$$\sqrt{3} \; \Phi 1 = \Phi 2 \qquad \text{(relation 12)}$$

Une combinaison des relations 10 et 12 précédentes conduit à :

$$\Phi 3^2 = \Phi 1^2 + \Phi 2^2 = 4\Phi 1^2$$

$$\text{Soit } \Phi 3 = 2\Phi 1 \text{ et } \Phi 3 = 2/\sqrt{3} \; . \; \Phi 2 \qquad \text{(relations 13)}.$$

Ainsi, le flux Φ3 qui parcourt le bras 47 est égal au double du flux Φ1 qui parcourt le bras 45 et au flux Φ2 qui parcourt le bras 46 multiplié par un facteur valant 2/√3 (soit environ 1,154).

Selon des propriétés bien connues de l'homme du métier, un flux magnétique dans un bras de transformateur est limité par le matériau magnétique et la section du noyau correspondant.

Ici, le flux le plus élevé est dans le bras de sortie 46. Les trois bras 45 à 47 du transformateur 40 ont une même section de noyau ($S1 = S2 = S3$). Aussi, afin de dimensionner correctement le transformateur, on détermine d'abord les caractéristiques du bras 46 et de la bobine 42 (section $S3$ du noyau et nombre de spires $N3$) par les relations définissant le spire-volt $SpV3$ dans le bras 46 en fonction de la tension de sortie $U3$ désirée.

Les surfaces $S1$, $S2$ et $S3$ des noyaux des trois bras 45 à 47 sont chacunes inférieures ou égales et préférentiellement sensiblement égales à chacune des surfaces $S$ de fermeture des culasses (extrémités) du convertisseur 40.

Le bras central 46 reçoit l'énergie engendrée par les deux autres bras 45 et 47, ce qui permet d'optimiser le rendement en fonction des sections $S1$, $S2$ et $S3$ des noyaux et des surfaces $S$ de fermetures. Selon une variante non représentée, un bras sur un premier coté du convertisseur et le bras central correspondent à des entrées et génère des flux récupérés par un bras sur le second coté du convertisseur. Selon cette variante, le rendement est limité par les surfaces de fermeture et n'est donc pas optimisé.

Puis, en combinant les relations précédentes, on obtient :

$\Phi 3/\Phi 1 = 2 = (U3/N3)/(U1/N1) = (N1/N3).(U3/U1)$; et

$\Phi 3/\Phi 2 = 2/\sqrt{3} = (U3/N3)/(U2/N2) = (N2/N3).(U3/U2)$;

soit :

$$N1 = 2.N3.U1/U3 \; ; \qquad \text{(relation 14)}$$

et

$$N2 = 2/\sqrt{3}.N3.U2/U3 = N1 \; \# \; 1,154.N3.U2/U3 \qquad \text{(relation 15)}.$$

Ainsi, les tensions $U1$ et $U2$ étant fixées par la tension d'alimentation triphasée, la tension de sortie monophasée $U3$, étant la tension de sortie désirée, il est possible de déterminer la valeur du nombre de spires $N1$ (respectivement $N2$) dans la bobine 45 (respectivement 47) en fonction du nombre de spires $N3$ dans la bobine 46. En d'autres termes, le nombre de spires $N1$, $N2$ et $N3$ sont des paramètres propres respectivement au transformateur 40. Ils doivent être choisis en fonction de la valeur désirée de $U3$, les tensions $U1$ et $U2$ étant imposées par le circuit d'alimentation triphasée.

Selon la relation 15, les nombres $N1$ et $N2$ de spires respectivement dans les bobines 45 et 47 sont égaux. Selon une variante non représentée, les nombres de spires N1 et N2 sont sensiblement égaux (c'est-à-dire égaux ou proches avec, par exemple une différence inférieure ou égale à 10% du nombre de spires N1 ou N2).

Ainsi, si *U1* et *U2* vallent respectivement 230V et 400V, si *N3* vaut 100, *N1* et *N2* doivent être de l'ordre de 200 pour obtenir une tension d'alimentation monophasée *U3* voisine de 230V selon les relations 14 et 15.

Par ailleurs, pour équilibrer les courants, selon les relations 13, il faut que la résistance *R2* de la bobine 46 soit égale à la résistance *R1* de la bobine 45 multipliée par un facteur égal à la racine carrée de 3, afin que les courants qui circulent respectivement dans les bobines 45 et 47 soient égaux. Selon une variante de réalisation, la résistance *R2* de la bobine 46 est sensiblement égale (c'est-à-dire égale ou proche avec, par exemple, une marge d'erreur inférieure ou égale à 10%) à la résistance *R1* de la bobine 45 multipliée par un facteur égal à la racine carrée de 3, afin que les courants qui circulent respectivement dans les bobines 45 et 47 soient sensiblement égaux.

Afin d'optimiser le rendement du transformateur 40, chacune des résistances R1, R2 et R3 des trois bobines 45 à 47 devra être la plus faible possible.

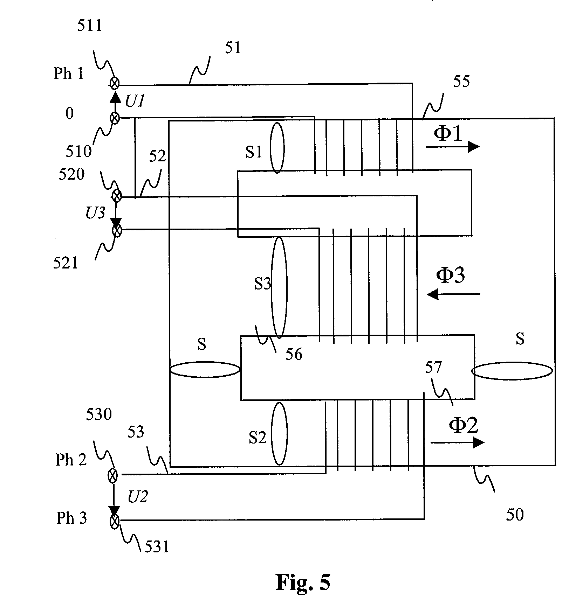

On présente, en relation avec la **figure 5** un convertisseur 50 alimenté par un circuit d'alimentation électrique en triphasé de 400 volts et fournissant en sortie une tension de sortie monophasée voisine de 230 volts mettant en oeuvre un transformateur selon l'invention.

Le convertisseur 50 comprend :

- trois bras 55, 56 et 57 de section adaptée, reliés entre eux par leurs extrémités formant un circuit magnétique triphasé ;
- trois bobines 51, 52 et 53 ;
- deux bornes de sorties 520 et 521 ; et
- quatre bornes d'entrée 510, 511, 530 et 531.

Les bornes d'entrée 511, 530 et 531 sont alimentées respectivement par la première, deuxième, et troisième phase (notées respectivement *Ph*1, *Ph*2 et *Ph*3) du circuit d'alimentation électrique triphasé.

La borne 510 est reliée à la fois au fil de neutre du circuit d'alimentation et au neutre du circuit de sortie.

La bobine 51 entoure le bras 55, comprend *N*1 spires et ses extrémités sont reliées à la borne 510 (neutre) et à la borne 511 (première phase du circuit d'alimentation) ; elle présente donc une tension d'entrée notée *U1* égale à la première phase du circuit d'alimentation.

La bobine 53 entoure le bras 57, comprend *N*2 spires et ses extrémités sont reliées à la borne 530 (deuxième phase du circuit d'alimentation) et à la borne 531 (troisième phase du circuit d'alimentation); elle présente donc une tension d'entrée notée *U2* égale à la différence des troisième et seconde phases du circuit d'alimentation.

La bobine 52 entoure le bras 56, comprend *N*3 spires et ses extrémités sont reliées aux bornes de sortie 520 (neutre) et 521 (phase du circuit d'alimentation monophasée en sortie); elle présente donc une tension de sortie monophasée notée *U3*.

Lorsque le convertisseur est sous tension, les bras 55, 57 et 56 sont parcourus respectivement par des flux magnétiques $\Phi1$, $\Phi2$ et $\Phi3$, les flux $\Phi1$ et $\Phi2$ étant créés respectivement par les bobines 51 et 53 et le flux $\Phi3$ étant reçu par la bobine 52.

Ainsi, la structure générale du transformateur 50 et proche de celle du convertisseur 40. Néanmoins, les bras 55 à 57 du transformateur 50 sont configurés pour optimiser les coûts de fabrication en grande série en permettant notamment une réduction du volume du fil de bobinage (par exemple en cuivre).

Dans le transformateur 50, les champs magnétiques *B1* à *B3* ont une même valeur *B*. Les relations 11 à 15 s'appliquent de la même manière pour les transformateurs 40 et 50, elles ne seront donc pas détaillées davantage en regard de la figure 5.

A partir des relations 13, on obtient :

- $\Phi3 = B.\ S3 = 2\ \Phi1 = 2\ B.S1$ ou $S3 = 2S1$ ; et
- $\Phi3 = B.\ S3 = 2/\sqrt{3}.\Phi2 = 2/\sqrt{3}.B.S2$ ou $S3 = 2/\sqrt{3}.S2$ ou $S2 = \sqrt{3}.S1 \# 1{,}732\ S1$.

Ainsi, dans ce mode de réalisation, la section *S3* du noyau du bras 57 (respectivement *S2* du noyau du bras 56) est égale à la section *S1* du noyau du bras 55 multipliée par un facteur égal à 2 (respectivement 1,732). Selon une variante non représentée, la section *S3* du noyau du bras 57 (respectivement *S2* du noyau du bras 56) est sensiblement égale à de la section *S1* (soit égale ou proche de la section *S1* avec une différence d'au plus 5%) du noyau du bras 55 multipliée par un facteur égal à 2 (respectivement 1,732).

Afin d'optimiser le rendement, la surface *S* de chacune des culasses du circuit magnétique est sensiblement égale à la surface *S2* (c'est la bobine du bras 56 qui génère le plus de flux).

Selon une variante non représentée, un bras sur un premier coté du convertisseur et le bras central correspondent à des entrées et génèrent des flux récupérés par un bras sur le second coté du convertisseur. Selon cette variante, les surfaces *S* des culasses sont chacune supérieures ou égales et préférentiellement égales à la surface du noyau du bras recevant le flux engendré par les deux autres bras.

De même que précédemment, les résistances des bobines seront équilibrées et choisies pour être les plus faibles possibles.

Bien entendu, l'invention n'est pas limitée aux exemples de réalisation mentionnés ci-dessus.

En particulier, l'homme du métier pourra apporter toute variante dans le type de transformateur monophasé ou à base de circuit magnétique triphasé utilisés dans les différents modes de réalisation de l'invention. Selon les variantes basées sur une conversion de tension avec transformateurs monophasés, chacun des transformateurs ou autotransformateurs monophasés pourra notamment comprendre des bobinages avec noyau magnétique et/ou des composants actifs permettant la transformation d'une tension d'entrée en une tension de sortie.

On note également que la conversion triphasé-monophasé ne se limite pas à une conversion d'une alimentation triphasée à 400 volts vers une alimentation monophasée à 230 Volts mais s'étend à tout signal d'alimentation périodique ou quasiment périodique (le signal étant ainsi sensiblement périodique avec, par exemple, avec une marge d'erreur inférieure ou égale à 10% sur la période ou l'amplitude du signal) (notamment de forme sinusoïdale ou quasiment sinusoïdale ou selon un motif de base triangulaire) ne comportant pas de composante continue, d'amplitude d'alimentation quelconque (basse, moyenne et haute tension) et de fréquence quelconque (correspondant ou non aux fréquences usuelles des réseaux publics comprises entre 48 et 63 Hz).

En outre, le circuit magnétique triphasé utilisé dans la conversion triphasé-monophasé n'est pas, selon l'invention, limité à l'utilisation de circuit magnétique à des surfaces de fermetures des bras égales (selon le convertisseur 40 illustré en regard de la figure 4) ou à des surfaces optimisées (selon le convertisseur 50 de la figure 5) mais s'étend, au contraire à tout mode de réalisation satisfaisant aux relations de flux précédemment indiquée (notamment les relations 11 à 15) et n'allant pas jusqu'à une saturation du champ magnétique à l'intérieur de l'un des bras pour les tensions d'utilisation du convertisseur.

De plus, le bras de sortie du circuit magnétique et le bobinage correspondant ne sont pas nécessairement au milieu de la structure du circuit, mais peut également être à l'une des extrémités (la position d'un bras de sortie avec le bobinage correspondant étant échangées avec celle d'un bras d'entrée).

Par ailleurs, le type de transformateur utilisé dans un convertisseur selon l'invention n'est pas limitatif et peut être notamment à noyau métallique, à ferrite, amorphe, monocristallin, ou, encore réalisé avec des matériaux supraconducteurs.

## Revendications

**1.** Dispositif de conversion (20, 30, 40, 50) d'une source électrique triphasée en une alimentation électrique monophasée, comprenant :

- une première entrée (23, 33, 411, 511) correspondant à une première phase (Ph1) de ladite source électrique triphasée ;
- une deuxième entrée (24, 34, 430, 530) correspondant à une deuxième phase (Ph2) de ladite source électrique triphasée ;
- une troisième entrée (25, 35, 431, 531) correspondant à une troisième phase (Ph3) de ladite source électrique triphasée ;
- une entrée (22, 32, 410, 510) de neutre ; et
- une sortie (26, 36, 421, 521) délivrant une tension (U3) de sortie correspondant à ladite alimentation électrique monophasée,

**caractérisé en ce que** ledit dispositif comprend :

- des premiers moyens de transformation (28, 38, 37, 41, 45, 51, 55) d'une tension entre ladite première entrée et ladite entrée de neutre en un premier flux d'énergie électromagnétique ;
- des seconds moyens de transformation (21, 31, 43, 47, 53, 57) d'une tension entre ladite deuxième entrée et ladite troisième entrée en un second flux d'énergie électromagnétique ;
- des moyens d'addition (28, 21, 27, 38, 31, 37, 46, 56) dudit premier flux et dudit second flux pour former un troisième flux d'énergie électromagnétique ; et
- des moyens de transformation (28, 21, 38, 31, 46, 42, 56, 52) dudit troisième flux en ladite tension de sortie.

**2.** Dispositif selon la revendication 1, **caractérisé en ce que** lesdites première, seconde et troisième phases de ladite source électrique triphasée varient selon une amplitude sensiblement périodique et sans composante continue.

**3.** Dispositif selon l'une quelconque des revendications 1 et 2, **caractérisé en ce que** lesdits premier et second flux sont en quadrature de phase.

**4.** Dispositif selon l'une quelconque des revendications 1 à 3, **caractérisé en ce que** ladite tension de sortie est présentée en sortie dudit dispositif entre un premier point de sortie (22, 39, 420, 520) et un second point de sortie (26, 36, 421, 521) ledit premier point de sortie étant relié à ladite entrée de neutre.

**5.** Dispositif (20, 30) selon l'une quelconque des revendications 1 à 4, **caractérisé en ce que** lesdits premier, second et troisième flux d'énergie électromagnétique sont des flux électriques.

**6.** Dispositif selon la revendication 5, **caractérisé en ce que** ledit dispositif comprend un premier transformateur (28, 38) monophasé et un second transformateur (21, 31) monophasé.

**7.** Dispositif selon la revendication 6, **caractérisé en ce que** lesdits premier et second transformateurs comprennent chacun un circuit (28, 210, 380, 310) à flux primaire et un circuit (28, 211, 381, 311) à flux secondaire ;

- **en ce que** les extrémités dudit circuit à flux primaire dudit premier transformateur sont reliées respectivement à ladite première entrée et à ladite entrée de neutre ;
- **en ce que** les extrémités dudit circuit à flux primaire dudit second transformateur sont reliées respectivement à ladite seconde entrée et à ladite troisième entrée ;
- **en ce qu'**une première extrémité dudit circuit à flux secondaire dudit premier transformateur est reliée (27, 37) à une première extrémité dudit circuit à flux secondaire dudit second transformateur ; et
- **en ce qu'**une seconde extrémité dudit circuit à flux secondaire dudit premier transformateur et une seconde extrémité dudit circuit à flux secondaire dudit second transformateur présentent ladite tension de sortie.

**8.** Dispositif selon l'une quelconque des revendications 6 et 7, **caractérisé en ce que** lesdits premier et second transformateurs ont respectivement des premier et second coefficients de transformation égaux.

**9.** Dispositif selon la revendication 8, **caractérisé en ce que** ladite tension de sortie est égale à deux fois ledit premier coefficient de transformation multiplié par la tension entre ladite première entrée et ladite entrée de neutre.

**10.** Dispositif selon l'une quelconque des revendications des revendications 6 à 9, **caractérisé en ce que** la résistance interne dudit second transformateur est sensiblement égale la résistance interne dudit premier transformateur multiplié par la racine carrée de trois.

**11.** Dispositif selon la revendication 6 à 10, **caractérisé en ce que** ledit premier transformateur est un autotransformateur (28).

**12.** Dispositif selon la revendication 6 à 10, **caractérisé en ce que** ledit premier transformateur (38) est un transformateur avec un circuit (380) à flux primaire et un circuit (381) à flux secondaire dissociés.

**13.** Dispositif selon la revendication 6 à 12, **caractérisé en ce que** lesdits premier et second transformateurs comprennent des moyens de ferro-résonance.

**14.** Dispositif (40, 50) selon l'une quelconque des revendications 1 à 4, **caractérisé en ce que** lesdits premier, second et troisième flux d'énergie électromagnétique sont des flux d'énergie magnétique.

**15.** Dispositif selon la revendication 14, **caractérisé en ce que** ledit dispositif comprend un circuit magnétique triphasé.

**16.** Dispositif selon la revendication 15, **caractérisé en ce que** ledit circuit magnétique triphasé comprend trois bras bobinés (45, 46, 47, 55, 56, 57), dits respectivement premier, second et troisième bras, comprenant chacun une bobine ; **en ce que** la bobine dudit premier bras est reliée à ladite première entrée et à ladite entrée de neutre ; **en ce que** la bobine dudit troisième bras est reliée à ladite deuxième entrée et à ladite troisième entrée ; et **en ce que** la bobine dudit deuxième bras présente à ses extrémités ladite tension de sortie.

**17.** Dispositif selon la revendication 16, **caractérisé en ce que** la résistance de la bobine dudit deuxième bras est sensiblement égale à la résistance de la bobine dudit premier bras multipliée par la racine carrée de trois.

**18.** Dispositif selon l'une quelconque des revendications 16 et 17, **caractérisé en ce que** les nombres de spires des bobines dudit premier bras et dudit deuxième bras sont sensiblement égaux.

**19.** Dispositif (40) selon l'une quelconque des revendications 16 à 18, **caractérisé en ce que** les sections des noyaux de chacun desdits premier, deuxième et troisième bras sont égales et, en outre, inférieures ou égales à chacune des surfaces de fermetures dudit circuit magnétique triphasé.

**20.** Dispositif (50) selon l'une quelconque des revendications 16 à 18, **caractérisé en ce que** la section du noyau dudit deuxième bras est sensiblement égale à la section du noyau dudit premier bras multipliée par la racine carrée de trois ; et
**en ce que** la section du noyau dudit troisième bras est sensiblement égale à la section du noyau dudit premier bras multipliée deux.

ETAT DE L'ART

**Fig. 1**

**Fig. 2A**

**Fig. 2B**

**Fig. 2C**

EP 1 422 817 A2

**Fig. 3**

17

411

Ph 1

41

45

Φ1

0

*U1*

410

420

42

S1

*U3*

421

40

Φ3

S3

S

S

46    47

430

43

Φ2

Ph 2

S2

*U2*

Ph 3

431

**Fig. 4A**

Ph 1 = *U1*

120°

0

30°

Ph 2

Ph 3

Ph3 - Ph2 = *U2*

**Fig. 4B**

Φ1    60°    Φ3

Φ2

**Fig. 4C**

**Fig. 5**